Europäisches Patentamt

European Patent Office

Office européen des brevets

(11) Veröffentlichungsnummer : **0 169 271**
**B1**

(12) # EUROPÄISCHE PATENTSCHRIFT

(45) Veröffentlichungstag der Patentschrift :
15.06.88

(21) Anmeldenummer : 84115421.4

(22) Anmeldetag : 14.12.84

(51) Int. Cl.⁴ : **F 16 M 11/04**, G 06 F 1/00

(54) Höhenverstellbarer Standfuss für ein Sichtgerät.

(30) Priorität : 26.06.84 DE 3423549

(43) Veröffentlichungstag der Anmeldung :
29.01.86 Patentblatt 86/05

(45) Bekanntmachung des Hinweises auf die Patenterteilung : 15.06.88 Patentblatt 88/24

(84) Benannte Vertragsstaaten :
DE FR GB IT SE

(56) Entgegenhaltungen :
WO-A-84 /031 34
DE-A- 2 847 135
DE-A- 3 036 852
US-A- 2 224 543

(73) Patentinhaber : TANDBERG DATA A/S
Kjelsasveien 161 Postboks 9 Korsvoll
N-0808 Oslo 8 (NO)

(72) Erfinder : Helgeland, Olav
Huseby 8
N-01482 Nittedal (NO)

(74) Vertreter : Mehl, Ernst, Dipl.-Ing. et al
Postfach 22 01 76
D-8000 München 22 (DE)

EP 0 169 271 B1

## Beschreibung

Die Erfindung bezieht sich auf einen höhenverstellbaren Standfuß für ein Sichtgerät gemäß dem Oberbegriff des Patentanspruchs 1.

Aus der WO-A-84/3134 (Veröffentlicht am 16.8.84) ist ein höhenverstellbarer Standfuß für ein Sichtgerät bekannt, der aus einem auf einer Arbeitsfläche stehenden Sockelteil und aus einem aus dem Sockelteil herausschiebbaren Trageteil gebildet wird. Das Trageteil ist unter Verwendung eines Getriebes aus dem Sockelteil herausschiebbar und zur Kompensation des Gewichts des Sichtgeräts ist zwischen dem Sockelteil und dem Trageteil eine Feder vorgesehen. Das Getriebe ist konzentrisch zu dem Trageteil angeordnet und enthält ein Verstellstück mit einem Außengewinde und mit einem Innengewinde. Das Außengewinde wirkt mit einem Gewindeansatz des Sockelteils und das Innengewinde wirkt mit einem Gewindeansatz des Trageteils zusammen, so daß bei einer Drehung des Verstellstücks sowohl das Sockelteil als auch das Trageteil aus dem Verstellstück heraus bzw. in dieses hinein verschoben wird.

Aus der DE-C-30 36 852 ist bereits ein höhenverstellbarer Standfuß für ein Sichtgerät bekannt, der aus einem auf einer Arbeitsfläche stehenden Sockelteil und einem über ein Getriebe verstellbaren, das Sichtgerät aufnehmenden Trageteil besteht. Das Getriebe wird aus einer am Trageteil in senkrechter Richtung angeordneten Zahnstange und einem am Sockelteil angeordneten Zahnrad gebildet, das über ein an der Achse des Zahnrads angeordnetes Handrad angetrieben wird. Bei einer Drehung des Handrads wird das Trageteil, je nach Drehrichtung aus dem Trageteil heraus verschoben oder in dieses hinein verschoben. Zum Ausgleich des Gewichts des Sichtgeräts ist zwischen dem Trageteil und dem Sockelteil eine Gasdruckfeder vorgesehen. Um auch ein Drehen und ein Neigen des Sichtgeräts zu ermöglichen, ist am Trageteil ein mit einer Wölbung versehener Drehteller angeordnet.

Der Erfindung liegt die Aufgabe zugrunde, den bekannten höhenverstellbaren Standfuß weiterzubilden. Insbesondere soll die Weiterbildung einen kostengünstigeren Aufbau ermöglichen und die Anforderungen n die Höhenverstellbarkeit nach DIN 66234, Teil 6 erfüllen.

Erfindungsgemäß wird die Aufgabe bei dem höhenverstellbaren Standfuß der eingangs genannten Art durch die im kennzeichnenden Teil des Patentanspruchs 1 angegebenen Merkmale gelöst.

Der Standfuß gemäß der Erfindung hat den Vorteil, daß durch die Verwendung des Schraubenrads und des entsprechenden Getriebeteils an der Säule in der jeweils eingestellten Stellung selbstsperrend verbleibt. Auf eine Bremse am Handrad kann somit verzichtet werden. Der Standfuß weist einen weiten Bereich der Höhenverstellbarkeit auf und kann verhältnismäßig schlank ausgebildet sein. Während der eingangs beschriebene Standfuß nur eine Höhenverstellbarkeit von 9 cm aufweist, ermöglicht der Standfuß gemäß der Erfindung eine Höhenverstellbarkeit von 11 cm.

Das an der Säule angeordnete Getriebeteil ist bei einer bevorzugten Ausführungsform des Standfußes als ein in einer seitlichen Ausnehmung der Säule angeordnetes nach außen weisendes Innengewinde ausgebildet, in das das Schraubenrad eingreift. Es ist auch möglich, das an der Säule angeordnete Getriebeteil als Zahnstange und das Schraubenrad als Schneckenrad auszubilden.

Ein besonders einfacher Aufbau des Standfußes ergibt sich, wenn die Säule zylinderförmig ausgebildet ist. Die Führung wird zweckmäßigerweise als der Säule angepaßte Öffnung des Sockelteils ausgebildet.

Zur Gewichtsentlastung ist es möglich, eine Gasfeder zu benutzen. Es erweist sich jedoch als kostengünstiger, zwischen dem Sockelteil und dem Trageteil eine Schraubenfeder anzuordnen. Diese wird zweckmäßigerweise konzentrisch zur Führungsstange angeordnet. Das weitere Getriebe, mit dem das Schraubenrad angetrieben wird, ist bei einer bevorzugten Ausführungsform als Kegelradgetriebe ausgebildet, wobei das eine Kegelrad mit einem Handrad verbunden ist und das andere Kegelrad das Schraubenrad antreibt.

Eine Drehbarkeit des Standfußes um bis zu 360° wird erreicht, wenn die Grundplatte auf einem auf der Arbeitsfläche aufliegenden Drehteller drehbar gelagert ist.

Zur einfacheren Montage werden das Schraubenrad und das weitere Getriebe an einem zwischen der Säule und einem Gehäuse des Standfußes angeordneten Trägerteil angeordnet.

Die Neigbarkeit des Sichtgeräts wird durch eine gelenkige Verbindung zwischen dem Sichtgerät und einem am oberen Ende der Säule angeordneten Lagerbock erreicht.

Ein Ausführungsbeispiel des höhenverstellbaren Standfußes gemäß der Erfindung wird im folgenden anhand von Zeichnungen näher erläutert. Es zeigen

Fig. 1 eine Frontansicht des höhenverstellbaren Standfußes mit einem daran befestigten Sichtgerät,

Fig. 2 eine Seitenansicht des Standfußes mit dem Sichtgerät,

Fig. 3 eine erstes Schnittbild des Standfußes,

Fig. 4 ein zweites Schnittbild des Standfußes.

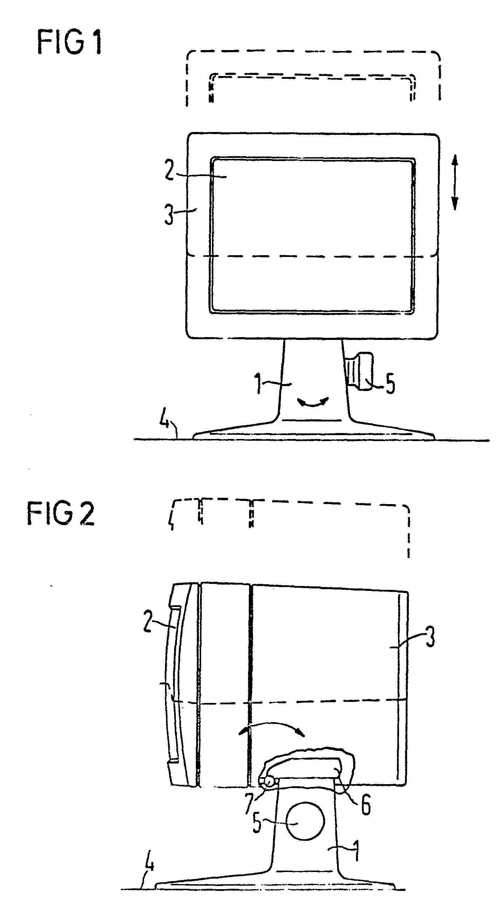

Auf dem in Fig. 1 dargestellten höhenverstellbaren Standfuß 1 ist ein mit einem Bildschirm 2 versehenes Sichtgerät 3 angeordnet. Die Höhe des Sichtgeräts 3 über einer Arbeitsfläche 4, auf der der Standfuß 1 steht, kann durch Drehen eines Handrads 5 von der durchgezogen dargestellten Stellung bis in die gestrichelt dargestellte Stellung verändert werden, um sich an die jeweiligen Wünsche des Benutzers hinsichtlich der Arbeitsplatzgestaltung anzupassen.

Der Standfuß 1 kann zusätzlich um eine senkrechte Achse drehbar ausgebildet sein, so daß hierdurch zusätzliche Erfordernisse einer Bedienperson hinsichtlich der Arbeitsplatzgestaltung erfüllt werden können.

Bei der in Fig. 2 dargestellten Seitenansicht des Standfußes 1 und des Sichtgeräts 3 ist zusätzlich dargestellt, daß das Sichtgerät 3 auch neigbar an dem Standfuß 1 befestigt sein kann. Zu diesem Zweck sind beispielsweise zu beiden Seiten eines am Standfuß angeordneten Lagerbock 6 Lagerzapfen 7 vorgesehen, die in entsprechende Bohrungen des Sichtgeräts 3 eingreifen. Um diese Lagerzapfen 7 ist das Sichtgerät 3 dann neigbar, so daß zusammen mit der Höhenverstellbarkeit und der Drehung eine optimale Arbeitsplatzgestaltung ermöglicht wird.

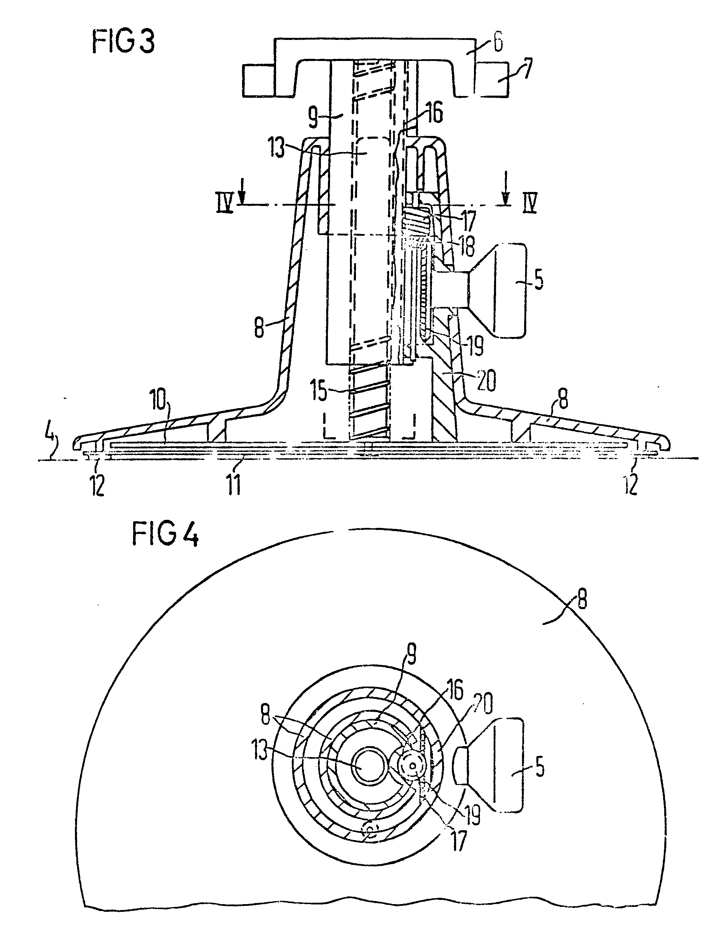

Der in Fig. 3 dargestellte Standfuß weist ein von einem Gehäuse 8 umfaßtes Sockelteil und ein aus einer im Sockelteil geführten Säule 9 und dem Lagerbock 6 gebildetes Trageteil auf. Das Gehäuse 8 ist mit einer Grundplatte 10 verbunden, die auf einem Drehteller 11 drehbar gelagert ist. Der Drehteller 11 steht mittels Gummifüßchen 12 auf der Arbeitsfläche 4. In der Mitte der Grundplatte 10 ist eine Führungsstange 13 senkrecht stehend angeordnet und dient als Federführung. Zwischen dem Lagerbock 6 und der Grundplatte 10 ist eine Schraubenfeder 15 angeordnet, die als Gewichtsausgleich für das Sichtgerät 3 und das Trageteil dient. Anstelle der Schraubenfeder 15 und der Führungsstange 13 kann auch eine Gasdruckfeder vorgesehen sein.

Die Höhenverstellung des Standfußes erfolgt unter Verwendung eines Getriebes, das aus einem längs der Säule 9 angeordneten Getriebeteil 16 und einem angetriebenen Schraubenrad 17 gebildet wird. Das Schraubenrat 17 kann durch einen Antriebsmotor oder über ein aus zwei Kegelrädern 18 und 19 gebildetes weiteres Getriebe durch die Drehung des Handrads 5 erfolgen. Das Schraubenrad 17 und die Kegelräder 18 und 19 sind in einem Trägerteil 20 gelagert, das innerhalb des Gehäuses 8 angeordnet ist und auf der Grundplatte 10 befestigt ist.

Das Schraubenrad 17 ist bei einer bevorzugten Ausführungsform mit einem linken Trapezgewinde versehen, um die gleiche Drehrichtung am Handrad zu bekommen, während das Gewindeteil 16 als Teil eines Innengewindes ausgebildet ist. Bei einer Drehung des Schraubenrads 17 wird dann die Säule 9 in senkrechter Richtung verschoben, wobei sie in Abhängigkeit von der Drehrichtung aufwärts oder abwärts verschoben wird. Die Säule 9 wird dabei durch eine entsprechende Ausgestaltung des Gehäuses 8 mit einer Öffnung geführt.

Das Schraubenrad 17 kann auch als Schneckenrad ausgebildet sein, während das Getriebeteil 16 als Zahnstange ausgebildet ist. Auch in diesem Fall bewegt sich bei einer Drehung des Schraubenrads 17 die Säule 9 in senkrechter Richtung. In beiden Fällen wird das am Lagerbock 6 befestigte Sichtgerät 3 in seiner Höhe verstellt. Die Drehung des Sichtgeräts wird durch den Drehteller 11 ermöglicht, auf dem die Grundplatte 10 und das Gehäuse 8 drehbar gelagert sind. Die Neigbarkeit des Sichtgeräts wird, wie bereits erwähnt, durch am Lagerbock 6 befestigte Lagerzapfen 7 erreicht, so daß das Sichtgerät in die jeweils optimale Stellung gebracht werden kann.

Bei dem in Fig. 4 dargestellten Schnittbild des Standfußes längs der Schnittlinie IV-IV in Fig. 3 ist zu erkennen, wie das im Trägerteil 20 gelagerte Schraubenrad 17 in das in einer Ausnehmung längs der Säule 9 angeordnete Innengewinde des Getriebsteils 16 eingreift. Über das Handrad 5 wird das Kegelrad 19 angetrieben, das seinerseits das nicht dargestellte Kegelrad 18 und damit das Schraubenrad 17 antreibt, wodurch die Höhenverstellbarkeit der Säule 9 und damit des über den Lagerbock 6 darauf befestigten Sichtgeräts 3 erreicht wird.

Das Innengewinde des Getriebeteils 16 muß nicht die vollständige Ausnehmung in der Säule 9 umfassen. Es ist auch möglich, die Seitenwände der Ausnehmung mindestens teilweise eben auszugestalten.

## Patentansprüche

1. Höhenverstellbarer Standfuß für ein Sichtgerät, bei dem ein auf einer Arbeitsfläche stehendes Sockelteil (8, 10) und ein aus dem Sockelteil (8, 10) herausschiebbares Trageteil (6, 9) vorgesehen sind, bei dem das Trageteil (6, 9) aus einer Säule (9) und aus einem das Sichtgerät aufnehmenden Lagerbock (6) gebildet wird, bei dem das Trageteil (6, 9) unter Verwendung eines Getriebes (16, 17) aus dem Sockelteil (8, 10) herausschiebbar ist und bei dem zur Kompensation des Gewichts des Sichtgeräts zwischen dem Sockelteil (8, 10) und dem Trageteil (6, 9) eine Feder (15) vorgesehen ist, dadurch gekennzeichnet, daß das Getriebe (16, 17) seitlich an der Säule (9) angeordnet ist und aus einem mit einem nach außen gerichteten Innengewinde versehenen, längs der Säule (9) angeordneten Getriebeteil (16) und aus einem in das Innengewinde des Getriebeteils (16) eingreifenden antreibbaren Schraubenrad (17) gebildet wird.

2. Höhenverstellbarer Standfuß nach Anspruch 1, dadurch gekennzeichnet, daß das Getriebeteil (16) als Zahnstange ausgebildet ist, die seitlich an der Säule (9) angeordnet ist und daß das Schraubenrad (17) als Schneckenrad ausgebildet ist.

3. Höhenverstellbarer Standfuß nach einem der Ansprüche 1 bis 2, dadurch gekennzeichnet, daß das Schraubenrad (17) über ein weiteres Getriebe (18, 19) durch ein Handrad (5) antreibbar ist.

4. Höhenverstellbarer Standfuß nach Anspruch 3, dadurch gekennzeichnet, daß das weitere Getriebe aus zwei Kegelrädern (18, 19) gebildet wird, wobei das eine Kegelrad (19) mit dem Handrad (5) und das andere Kegelrad (18) mit dem Schraubenrad (17) verbunden ist.

5. Höhenverstellbarer Standfuß nach einem der Ansprüche 1 bis 4, dadurch gekennzeichnet, daß die Säule (9) mittels einer Öffnung im Gehäuse (8) des Sockelteils geführt wird.

6. Höhenverstellbarer Standfuß nach einem der Ansprüche 1 bis 5, dadurch gekennzeichnet, daß die Säule (9) zylinderförmig ausgebildet ist.

7. Höhenverstellbarer Standfuß nach Anspruch 6, dadurch gekennzeichnet, daß eine senkrechte Führungsstange (13) vorgesehen ist, um die die Feder (15) angeordnet ist.

8. Höhenverstellbarer Standfuß nach einem der Ansprüche 1 bis 7, dadurch gekennzeichnet, daß eine Grundplatte (10) des Sockelteils auf einem auf der Arbeitsfläche aufliegenden Drehteller (11) drehbar gelagert ist.

9. Höhenverstellbarer Standfuß nach einem der Ansprüche 1 bis 8, dadurch gekennzeichnet, daß das Schraubenrad (17) an einem zwischen der Säule (9) und dem Gehäuse (8) angeordneten Trägerteil (20) drehbar gelagert ist.

10. Höhenverstellbares Sichtgerät nach Anspruch 9, dadurch gekennzeichnet, daß die Kegelräder (18, 19) eines das Schraubenrad (17) antreibenden weiteren Getriebes am Trägerteil (20) drehbar gelagert sind.


## Claims

1. Vertically adjustable upright support for a display unit, in which a pedestal part (8, 10) standing on a work surface and a supporting part (6, 9) which can be pushed out of the pedestal part (8, 10) are provided, in which the supporting part (6, 9) is formed from a column (9) and from a mounting block (6) accommodating the display unit, in which the supporting part (6, 9), with the use of gearing (16, 17), can be pushed out of the pedestal part (8, 10) and in which, to compensate the weight of the display unit, a spring (15) is provided between the pedestal part (8, 10) and the supporting part (6, 9), characterized in that the gearing (16, 17) is arranged laterally on the column (9) and is formed from a gearing part (16), provided with an outwardly directed internal thread and arranged along the column (9), and from a driveable helical gear (17) engaging into the internal thread of the gearing part (16).

2. Vertically adjustable upright support according to claim 1, characterized in that the gearing part (16) is made as a gear rack which is arranged laterally on the column (9), and that the helical gear (17) is made as a worm gear.

3. Vertically adjustable upright support according to one of claims 1 to 2, characterized in that the helical gear (17) can be driven by a hand wheel (5) via further gearing (18, 19).

4. Vertically adjustable upright support according to claim 3, characterized in that the further gearing is formed from two bevel gears (18, 19), wherein the one bevel gear (19) is connected to the hand wheel (5) and the other bevel gear (18) is connected to the helical gear (17).

5. Vertically adjustable upright support according to one of claims 1 to 4, characterized in that the column (9) is guided by means of an opening in the housing (8) of the pedestal part.

6. Vertically adjustable upright support according to one of claims 1 to 5, characterized in that the column (9) is made cylindrical.

7. Vertically adjustable upright support according to claim 6, characterized in that a perpendicular guide rod (13) is provided around which the spring (15) is arranged.

8. Vertically adjustable upright support according to one of claims 1 to 7, characterized in that a base plate (10) of the pedestal part is rotatably mounted on a rotary plate (11) resting on the work surface.

9. Vertically adjustable upright support according to one of claims 1 to 8, characterized in that the helical gear (17) is rotatably mounted on a bearer part (20) arranged between the column (9) and the housing (8).

10. Vertically adjustable display unit according to claim 9, characterized in that the bevel gears (18, 19) of further gearing driving the helical gear (17) are rotatably mounted on the bearer part (20).


## Revendications

1. Pied-support réglable en hauteur destiné à un appareil de visualisation, dans lequel est prévue une partie socle (8, 10) posée sur une surface de travail, et une partie porteuse (6, 9) mobile hors de la partie socle (8, 10), dans lequel la partie porteuse (6, 9) est formée d'une colonne (9) et d'un support (6) recevant l'appareil de visualisation, dans lequel la partie porteuse (6, 9) est mobile hors de la partie socle (8, 10) par l'utilisation d'une transmission (16, 17), et dans lequel un ressort (15) est prévu pour compenser le poids de l'appareil de visualisation, entre la partie socle (8, 10) et la partie porteuse (6, 9), caractérisé en ce que la transmission (16, 17) est ménagée latéralement à la colonne (9) et est réalisée par un élément de transmission (16) ménagé le long de la colonne (9) et pourvue d'un filetage intérieur dirigé vers l'extérieur, et d'une vis sans fin (17) pouvant être entraînée et qui engrène avec le filetage intérieur de l'élément de transmission (16).

2. Pied-support réglable en hauteur selon la revendication 1, caractérisé en ce que l'élément de transmission (16) est formé d'une crémaillère qui est disposée latéralement sur la colonne (9), et que la vis sans fin (17) est formée par une roue hélicoïdale.

3. Pied-support réglable en hauteur selon l'une des revendications 1 à 2, caractérisé en ce que la vis sans fin (17) peut être actionnée au moyen d'une roue à main (5), par l'intermédiaire d'une autre transmission (18, 19).

4. Pied-support réglable en hauteur selon la revendication 3, caractérisé en ce que ladite autre transmission est formée de deux roues coniques (18, 19), l'une des roues coniques (19) étant reliée à la roue à main (5) et l'autre roue conique (18) à la vis sans fin (17).

5. Pied-support réglable en hauteur selon l'une des revendications 1 à 4, caractérisé en ce que la colonne (9) est guidée au moyen d'une ouverture dans le corps (8) de la partie socle.

6. Pied-support réglable en hauteur selon l'une des revendications 1 à 5, caractérisé en ce que la colonne (9) est réalisée sous forme d'un cylindre.

7. Pied-support réglable en hauteur selon la revendication 6, caractérisé en ce qu'est prévue une tige conductrice (13) verticale, autour de laquelle est disposé le ressort (15).

8. Pied-support réglable en hauteur selon l'une des revendications 1 à 7, caractérisé en ce qu'une plaque d'assise (10) de la partie socle est montée, mobile en rotation, sur un plateau tournant (11) posé sur la surface de travail.

9. Pied-support réglable en hauteur selon l'une des revendications 1 à 8, caractérisé en ce que la vis sans fin (17) est montée, mobile en rotation sur une partie porteuse (20) ménagée entre la colonne (9) et le corps (8).

10. Pied-support réglable en hauteur selon la revendication 9, caractérisé en ce que les roues coniques (18, 19) d'une autre transmission entraînant la vis sans fin (17), sont montées mobiles en rotation sur la partie porteuse (20).

FIG 1

FIG 2

FIG 3

FIG 4